# EUROPEAN PATENT APPLICATION

(11) **EP 1 526 749 A2**
(43) Date of publication of application: **27.04.2005**
(21) Application number: 04256413.8
(22) Date of filing: 19.10.2004
(51) Int. Cl.: H04Q 7/38

(54) **System and method for mobile-based location information**

(30) Priority: 21.10.2003 US 690229
(71) Applicant: Openwave Systems Inc., Redwood City, CA 94063 (US)
(72) Inventor: Cedervall, Mats, 16446 Kista (SE)
(74) Representative: Jackson, Richard Eric

(57) **Abstract**

A system and method is disclosed for providing location information to a location application directly from a mobile device. In an embodiment of the invention, a mobile device comprises means for detecting when the mobile device has moved from a first base station coverage area to a second base station coverage area, and means for creating a data-layer message, the message comprising an identification of the second base station. In another embodiment of the invention, a wireless device provides location information by detecting when the wireless device changes from communicating with a first cell to communicating with a second cell, and by sending a data-layer message from the wireless device to a location application, wherein the data message comprises an identification of the second cell.

## Description

### TECHNICAL FIELD

The present invention is directed generally to location-based services and, more particularly, to mobile devices that provide location information via user-plane messages.

### SYSTEM AND METHOD FOR MOBILE-BASED LOCATION INFORMATION

### BACKGROUND

Event-based, location-based mobile applications provide services when an event occurs or when the mobile device enters or leaves a specific area. These services may also be considered to be event-based, wherein an event, such as entering or leaving an area, changing wireless network cells, or changing a network status, acts as a trigger that causes the location of the mobile device to be sent to a location-based application. Location-based services include, for example, tracking applications that track the position of users or vehicles, advertising applications that push advertising to the mobile device when the user enters a particular area, and friend-finder applications that notify users when they are close to selected other users. These applications assume or require that the wireless network knows where the mobile devices is located at least to the cell level. The wireless network often knows only the location area (LA) of the mobile device. The LA may comprise dozens or hundreds of cells. If the mobile device is not actively operating, the wireless network may be notified of the mobile device's location only when the device changes LAs, but not when the device changes cells.

The wireless network needs to know the LA of the mobile device so that the network can page the device to initiate calls. If a location-based application needs to know the location of the mobile device, then the wireless network may be configured to track the mobile device's location at the cell level, but this requires processing by the network to collect cell location information, including sending paging messages in all cells of the LA.

Additional techniques can be used to refine the mobile device's location within a cell. For example, by tracking angle-of-arrival or time-of-arrival information, the mobile device or serving base station may be able to narrow the device's location to a particular portion of a cell. Specially configured mobile devices, such as those with global positioning system (GPS) devices, may be able to provide the geographic coordinates for the mobile device's location. In prior systems, when these techniques are used, the wireless network is required to monitor and track the mobile device's location which imposes additional processing burdens on the wireless network.

Some prior art location-based applications must query the wireless network to determine the location of a mobile device. In other prior art systems, the wireless network must determine when to send location information to the location applications. Existing systems do not allow the mobile device to send location information directly to a location application.

### SUMMARY OF THE INVENTION

The present invention is directed to a system and method for deploying the location reporting function in the mobile device. In addition to reporting its location to the wireless network, the mobile device also reports directly to a location-tracking application using, for example, data-layer or user-plane messages such as email, short message service (SMS) messages, or multimedia messaging service (MMS) messages.

The mobile device detects when it moves from one serving cell to another cell. Whenever the mobile device enters a new cell, it reports the identification of its current cell to a location application via a data-layer message. For example, the mobile may be directed to report its current cell identifier to a specific email address, URL or network data address every time it enters a new cell. A time limit may be placed on the reporting process to minimize the number of messages that are generated by a fast moving device, such as a mobile device in a car that travels through several cells along a highway in a short period of time.

In one embodiment, a mobile device in a GSM network monitors its current cell at an interval between 0.5 to 2 seconds depending upon the mobile device's state. Each time the mobile device moves from one serving cell to another, the device generates a network measurement report (NMR). The network measurement report includes the identification of the serving cell. Normally, the NMR is sent to the wireless network only when performing a location update procedure (switching LA) or when the mobile is active. In the present invention, the NMR is sent to a location application or server via a data message. The data message is routed to a URL or data address for the location application.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated that the conception and specific embodiment disclosed may be readily utilized as a basis for modifying or designing other structures for carrying out the same purposes of the present invention. It should also be realized that such equivalent constructions do not depart from the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

FIGURE 1 is a block diagram of a system incorporating embodiments of the invention; and

FIGURE 2 is a flowchart illustrating one embodiment of the invention.

### DETAILED DESCRIPTION OF THE INVENTION

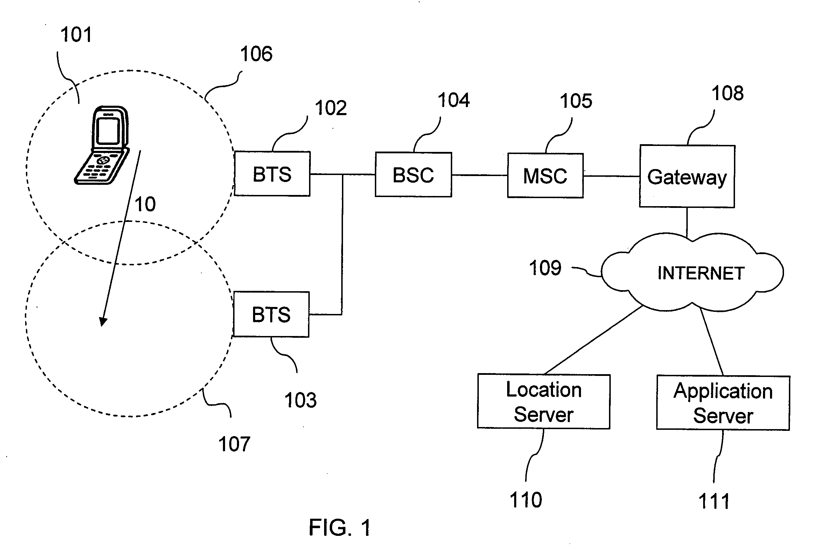

FIGURE 1 is a simplified block diagram of a system incorporating embodiments of the present invention. In an exemplary wireless network, mobile device 101 communicates with a base transceiver station (BTS), such as BTS 102. Base station controller (BSC) 104 is connected to and controls a group of BTSs, including BTSs 102 and 103, in a wireless network. Mobile switching center (MSC) 105 is connected to one or more BSCs in the wireless network. The illustrated network, wherein a plurality of BTSs are coupled to a BSC and MSC, is typical of a GSM wireless network. However, the GSM system shown in FIGURE 1 is merely exemplary, and the present invention may be used with any wireless network, protocol, access method, or standard.

Each BTS serves a geographic radio coverage area or cell. A mobile subscriber is typically in communication with the closest BTS because the subscriber is within the coverage area or cell for that BTS. For example, in FIGURE 1, mobile device 101 is within cell 106, which is the coverage area served by BTS 102. Mobile device 101 is in communication with BTS 102 and, therefore, can be defined generally to be operating in the geographic area covered by cell 106. Mobile device may also move from one area to another, such as from the area served by cell 106 to an area served by cell 107 as illustrated by arrow 10. As a result of such movement, the mobile device may switch from communicating with BTS 102 to communicating with BTS 103.

Mobile devices monitor both the power of the serving base station (or BTS) and the power of near by base stations (or BTSs). In the exemplary system of FIGURE 1, mobile device 101 monitors the power level from serving BTS 102 in addition to nearby BTS 103. As mobile subscriber 101 moves from cell 106 toward cell 107, mobile subscriber 101 detects a higher power level from BTS 103 compared to BTS 102. At some point, depending upon the network's protocol or standard, mobile subscriber 101 eventually switches its connection from BTS 102 to BTS 103. Mobile device 101 may send some type of base station power report, such as a network measurement report (NMR), via its serving base station to BSC 104 or MSC 105. The power reports include the power levels detected by the mobile device from the serving base station and from the nearby base stations. These power reports identify the currently serving base station for the mobile device and are used by the wireless network to determine when the mobile device should switch to a new base station.

Mobile device 101 is capable of sending text messages or packet-based messages to other devices. For example, mobile device 101 can send email messages, SMS messages, MMS messages, or other packet-based messages to addresses identified by a uniform resource locator (URL) or data address. These messages may be composed on mobile device 101 and then transmitted to the wireless network which routes the messages to gateway 108 via a data layer or user plane. As used in the present disclosure, the term user plane is differentiated from the control plane. The control plane handles all information necessary to control the communication, such as transmission characteristics, which typically includes levels 2-5 in the OSI protocol stack. User-plane data is data that is relevant for the application that the user is using. For example, when sending an SMS message, the text or content in the SMS message is the user-plane data, whereas the channels over which the SMS is sent carries control plane information.

Gateway 108 is an interface between the wireless network and Internet 109. Gateway 108 routes messages between the wireless network and other devices, such as location server 110 or application server 111. In one embodiment, gateway 108 may be a SMS center (SMSC), a MMS center (MMSC), or an email gateway. Internet 109 may include public and/or private local area networks, wide area networks, and/or global computer networks.

In one embodiment of the present invention, location server 110 sends a message to mobile device 101 instructing the mobile device to send information from the base station power reports whenever the mobile device changes cells. Location server 110 identifies a certain URL, IP address or other destination to which the reports should be directed. Mobile device 101 continues to operate as normal, providing communication and/or data services to the user. When mobile device 101 switches cells, it generates a message that includes information from the base station power reports (NMR). For example, mobile device 101 may generate an email message that comprises a network measurement report. This email is then sent to an IP address designated by location server 110. The message is sent over an IP connection that is initiated by mobile device 101, such as a wireless application protocol (WAP) wireless transport layer (WTP) connection.

Location server 110 receives the NMR message and extracts the identification of new serving BTS 103 for mobile device 101. Location server 110 may then use a database comprising BTS configuration data to convert the identity of BTS 103 to a physical location for mobile 101. The updated location of mobile device 101 is stored on location server 110. The location of mobile device 101 may also be provided to location-based applications or other applications that are triggered by changes in the mobile device's location. For example, applications running on application server 111 may require location information regarding mobile device 101. When location server 110 receives a NMR and updates mobile device 101's location, location server 110 sends the location information to application server 111 for further processing.

In addition to locating the mobile device within the geographic area covered by cell 107, location server 110 may also use additional algorithms to further refine the physical location of mobile device 101 within cell 107. For example, if the mobile device 101 is configured to determine global positioning system (GPS) information, then device 101 may send such information to server 101 possibly along with the network measurement report.

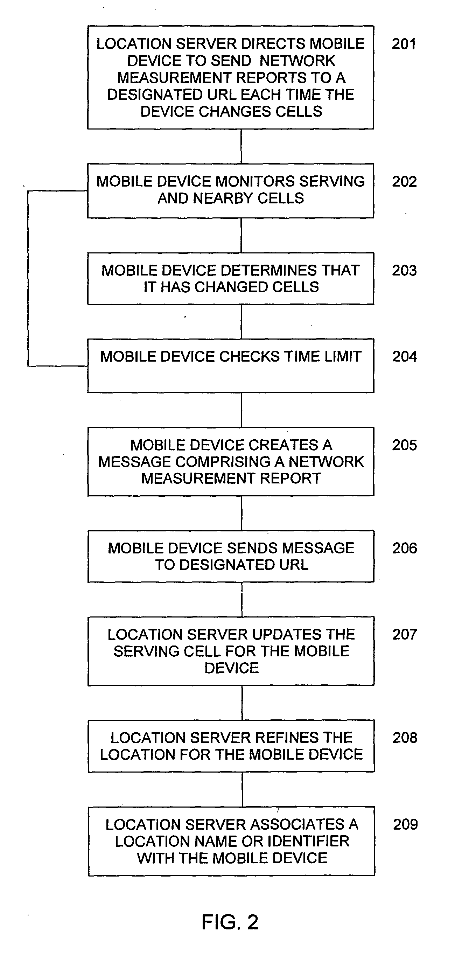

FIGURE 2 is a flowchart illustrating one embodiment of the invention. At 201, the location server directs the mobile device to send network measurement reports to a designated URL or address each time the mobile device changes cells. The mobile device monitors the serving cell and nearby cells in 202. When the mobile device determines in 203 that it has changed cells, the process may check a time limit in 204. The time limit prevents a rapidly moving mobile device from sending a number of location messages in a short period of time by setting a threshold time that must pass between updates. For example, a time limit of five minutes may be set to prevent the mobile from sending location updates less than five minutes apart.

If the mobile has changed cells and it has been longer than the time limit, then the mobile device creates a message comprising a NMR at 205. The mobile device then sends the message to the designated URL or data address at 206. The location server receives the message at 207 and updates the serving cell for the mobile device. At 208, the location server may further refine the physical location of the mobile device if additional information is available. At 209, the location server associates a location name or identifier with the mobile device. The location identifier may be a code that is adapted to be used by other applications, such as geographic coordinates. The location name or identifier is sent to applications that require information regarding the mobile device's location.

As used herein, the term wireless or mobile device may include any device that is capable of communicating with a wireless network, such as, for example, a mobile or cellular telephone, handset, a personal digital assistant (PDA); a portable, laptop, notebook or other computer; a pager; a BLACKBERRY®-type email device, or a telematics device.

In one embodiment, the mobile device comprises means for detecting when the mobile device has moved from a first base station coverage area to a second base station coverage area. The means for detecting may be any processor, application specific integrated circuit (ASIC), chip or other circuit within the mobile device. The detecting means may be only one of many functions running on the processor, ASIC, chip or other circuit, or the processor, ASIC, chip or circuit may be dedicated to detecting when the mobile device has moved from a first base station coverage area or cell to a second base station coverage area or cell. The detecting means may determine that the mobile device has switched from a first cell coverage area to a second cell coverage area.

The mobile device also comprises means for creating a data-layer message, wherein the message comprises an identification of the second base station. The means for detecting may be any processor, ASIC, chip or other circuit within the mobile device. The message creating means may be only one of many functions running on the processor, ASIC, chip or other circuit, or the processor, ASIC, chip or circuit may be dedicated to creating a data-layer message. The data-layer message may be in any appropriate format that is compatible with the standards or protocols available to the mobile device and the wireless network, such as an email message, SMS message, MMS message, message addressed to a URL, data message sent to an IP address or the like. A connection is normally associated with Transmission Control Protocol (TCP), but may also use User Datagram Protocol (UDP). The data-layer message may include other information, such as NMR information.

The mobile device may also comprise means for transmitting the data-layer message to a location-tracking application. The means for transmitting also may be any dedicated or shared processor, ASIC, chip or other circuit within the mobile device. Alternatively, the means for transmitting the data-layer message may be a transmitter circuit that establishes a data or IP connection between the mobile device and other devices, such as servers on the wireless network or on the Internet. In one embodiment, the means for transmitting transmits the data-layer message via a wireless application protocol (WAP) wireless transport layer (WTP) connection.

Embodiments of the invention include a method for providing location information from a wireless or mobile device. The method comprises detecting when the wireless device changes from a first cell to a second cell. The method also comprises sending a data-layer message from the wireless device to a location application, wherein the data message comprises an identification of the second cell. The location application is any application, such as software or logic instructions running on a server, in the network or locally in the mobile, that is directed to monitoring, processing or storing location information for mobile or wireless devices. The location application may also provide location information to other applications for further processing.

The method further comprises monitoring a first power level of a first base station signal in the first cell and monitoring a second power level of a second base station signal in the second cell. The power levels may be reported to the wireless network. The monitoring processes allow the wireless network or mobile device to determine which base station would provide optimal service. Typically, the base station with the strongest signal is designated to service the wireless device. The wireless device may move among cells in the wireless network so that the signal from the second base station is stronger than the signal from the first base station. In such a situation, the wireless device may switch from the first base station to the second base station. Such a switch between base stations is often the result of movement of the wireless device.

The method may further comprise receiving, from the location application, an instruction identifying a data address that is to receive the data-layer message. The wireless device may receive other provisioning messages from the location server. The provisioning message may provide instructions to the wireless or mobile device regarding which events should trigger a data-layer message. The provisioning message may include data such as a data address that is to receive the data-layer message, a start time and/or end time of an event watch period during which data-layer messages may be sent, a minimum reporting interval to prevent the sending of data-layer messages too often, a list of cells or areas for which the wireless device should send the data-layer message when leaving or entering so that the user or location application may focus on particular areas, and a list of wireless device status indicators, such as busy or idle status, for which the data-layer message should be sent.

In some embodiments, the wireless device only reports location information in the data-layer when it is requested or instructed to by the wireless network or another application. The data address to be used for the data-layer message may be an email address, a telephone number for an SMS message, an IP address, a URL or any other address format. Similarly, the data-layer message may be an email message, an SMS message, a MMS message or other message.

The present invention also provides a method for obtaining location information at a location application. The location application, which may be a software application running on a server, sends a message to a mobile device. The message identifies a data address to which the mobile device is to send report messages whenever the mobile device senses a selected event, such as switching cells in a wireless network, or entering or leaving an area. The location application then receives the report messages from the mobile device. The report messages comprise an identifier for the currently serving cell for the mobile device. The location application correlates the currently serving cell identifier to physical location information, such as geographic coordinates of the base station or a location name.

Location-based applications may be registered with the location server to receive updates when the mobile device changes location. The location server sends the physical location information to the location-based applications, which may co-located, such as software applications on the same server, or may be remotely located on other servers, in which case the location information may be transmitted via the Internet, for example. The location-based application may then provide a service based upon the physical location information for the mobile device. The location-based application may offer various services, such as, for example, advertising, instant messenger and tracking services. The application may provide targeted advertising services by pushing advertisements to the mobile device. The advertisements may be selected based upon the mobile device's location. A user in a shopping mall location, for example, may receive advertisements for stores in that particular shopping mall.

Other services include instant messenger services, such as services that notify a user when predesignated "buddies" or other users are nearby or moving or registered on the network by monitoring their mobile devices. Tracking services would allow the location-based application to track where one or more mobile devices are located. Such services would be useful for delivery services, couriers, public safety or other users who are continuously on the move.

In an alternative embodiment of the invention, the mobile device comprises means for detecting when the mobile device has moved a predetermined distance. The detecting means may comprise any dedicated or shared processor, ASIC, chip or other circuit within the mobile device. In one embodiment, the means for determining comprises a global positioning system (GPS) apparatus capable of providing location information for the mobile device. The location information may include geographical coordinates. The mobile device may also comprise assisted GPS (AGPS) means for improving location accuracy using information from a wireless network.

The mobile device may create a data-layer message comprising location information for the mobile device. The data-layer message may further comprise NMR information for the mobile device, or status information for the mobile device, such as network presence information, busy status, or idle status. The mobile device may comprise means for sending the data-layer message to a predesignated address whenever the mobile device moves a specified distance. The means for sending may be any dedicated or shared processor, ASIC, chip or other circuit within the mobile device.

The mobile or wireless device provides location information by detecting when the mobile device has moved a predetermined distance and by sending a data-layer message to a predesignated address. The mobile device may receive instructions to send the data-layer message to the predesignated address. The device may receive instructions to send the data-layer message whenever the mobile device moves a specified distance, or whenever the mobile device enters and/or leaves an area identified in a list of one or more areas, such as wireless network location areas (LAs), geographic areas, or wireless network cells. Other events that trigger sending a data-layer message may include the subscriber changing settings in the device (e.g. changing profile from "meeting" to "outdoors") The location areas or cells may be defined by network components, such as particular cells, base stations or BTSs. The geographical areas may be defined, for example, by geographical coordinates or by areas within a certain radius of a defined point.

The mobile or wireless device may also be configured with the capability of allowing the user to prevent the sending of location information. For example, a user override type of feature may be incorporated into the device to prevent reporting of network measurement reports. This feature provides privacy functionality for the user wherein the user can select to not update a location application or server.

Although the present invention and its advantages have been described in detail, it should be understood that various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one will readily appreciate from the disclosure, processes, machines, manufacture, compositions of matter, means, methods, or steps, presently existing or later to be developed that perform substantially the same function or achieve substantially the same result as the corresponding embodiments described herein may be utilized. Accordingly, the appended claims are intended to include within their scope such processes, machines, manufacture, compositions of matter, means, methods, or steps.

## Claims

1. A mobile device comprising:
means for detecting when the mobile device has moved from a first base station coverage area to a second base station coverage area; and
means for creating a data-layer message, the message comprising an identification of the second base station.

2. The mobile device of claim 1 further comprising:
means for transmitting the data-layer message to a location-tracking application.

3. The mobile device of claim 1 wherein the message is an electronic mail message.

4. The mobile device of claim 1 wherein the message is a short message service (SMS) message.

5. The mobile device of claim 1 wherein the message is a multimedia messaging service (MMS) message.

6. The mobile device of claim 1 wherein the message comprises network measurement report information.

7. The mobile device of claim 2 wherein the means for transmitting transmits the message via a wireless application protocol (WAP) wireless transport layer (WTP) connection.

8. The mobile device of claim 1 wherein the means for detecting and the means for creating comprise software applications running on a processor within the mobile device.

9. The mobile device of claim 1 further comprising:
means, selectable by a user, for preventing the creating of the data-layer message.

10. A method for providing location information from a wireless device comprising:
detecting when the wireless device changes from a first cell to a second cell; and
sending a data-layer message from the wireless device to a location application, wherein the data message comprises an identification of the second cell.

11. The method of claim 10 further comprising:
monitoring a first power level of a first base station signal in the first cell;
monitoring a second power level of a second base station signal in the second cell; and
determining when the second base station signal is greater than the first base station signal.

12. The method of claim 10 further comprising:
receiving, from the location server, a provisioning message comprising data selected from the group consisting of:
a data address that is to receive the data-layer message;
a start time of an event watch;
an end time of the event watch;
a minimum reporting interval;
a list of cells or areas for which the wireless device should send the data-layer message when leaving or entering; and
a list of wireless device status indicators for which the data-layer message should be sent.

13. The method of claim 10 wherein the data-layer message is an email message.

14. The method of claim 10 wherein the data-layer message is directed to a uniform resource locator (URL) that is identified by the location application.

15. The method of claim 10 wherein the message is a short message service (SMS) message.

16. The method of claim 10 wherein the message is a multimedia messaging service (MMS) message.

17. A method for obtaining location information comprising:
sending a message to a mobile device, wherein the message identifies a data address to which the mobile device is to send report messages whenever the mobile device switches cells in a wireless network; and
receiving report messages from the mobile device, wherein the report messages comprise a currently serving cell identifier for the mobile device.

18. The method of claim 17 further comprising:
correlating the currently serving cell identifier to physical location information; and
sending the physical location information to a location-based application.

19. The method of claim 18 wherein the location-based application provides a service based upon the physical location information.

20. The method of claim 19 wherein the service is selected from the group consisting of:
advertising services;
instant messenger services; and
tracking services.

21. The method of claim 17 wherein the data address is a uniform resource locator (URL) for a server running a location application.

22. The method of claim 17 wherein the report message is of a type selected from the group consisting of:
email messages
short message service (SMS) messages; and
multimedia messaging service (MMS) messages.

23. A mobile device comprising:
means for detecting when the mobile device has moved a predetermined distance; and
means for creating a data-layer message, the message comprising location information for the mobile device.

24. The mobile device of claim 23 wherein the location information is geographical coordinates.

25. The mobile device of claim 23 wherein the location information is an identifier for a base station currently in communication with the mobile device.

26. The mobile device of claim 23 further comprising:
a global positioning system (GPS) apparatus capable of providing location information for the mobile device.

27. The mobile device of claim 26 further comprising:
assisted GPS (AGPS) means for improving location accuracy using information from a wireless network.

28. The mobile device of claim 23 wherein the data-layer message further comprises:
network measurement report information for the mobile device.

29. The mobile device of claim 23 wherein the data-layer message further comprises:
status information for the mobile device.

30. The mobile device of claim 29 wherein the status information is selected from the group consisting of:
network presence information;
busy status;
idle status; and
a change in status.

31. The mobile device of claim 23 further comprising:
means for sending the data-layer message to a predesignated address whenever the mobile device moves a specified distance.

32. The mobile device of claim 23 further comprising:
means, selectable by a user, for preventing the creating of the data-layer message.

33. A method for providing location information comprising:
detecting, at a mobile device, when the mobile device has moved a predetermined distance; and
sending a data-layer message to a predesignated address, the message comprising location information for the mobile device.

34. The method of claim 33 further comprising:
receiving, at the mobile device, instructions to send the data-layer message to the predesignated address.

35. The method of claim 33 further comprising:
receiving, at the mobile device, instructions to send the data-layer message whenever the mobile device moves a specified distance.

36. The method of claim 33 further comprising:
receiving, at the mobile device, instructions to send the data-layer message whenever the mobile device enters and/or leaves an area identified in a list of one or more areas.

37. The method of claim 36 wherein the list of one or more areas comprises areas selected of the group consisting of:
wireless network location areas;
geographic areas; and
wireless network cells.

38. The method of claim 33 wherein the data-layer message further comprises:
a network measurement report.

39. The method of claim 33 further comprising:
detecting a user selection to not send the data-layer message.
